# EUROPÄISCHE PATENTSCHRIFT

(11) **EP 2 878 844 B1**
(45) Veröffentlichungstag und Bekanntmachung des Hinweises auf die Patenterteilung: **12.04.2017**
(21) Anmeldenummer: 14187295.2
(22) Anmeldetag: 01.10.2014
(51) Int. Cl.: F16D 55/2255, F16D 65/56, F16D 55/226, F16D 65/18

(54) **Scheibenbremse**
Disc brake
Frein à disque

(30) Priorität: 04.10.2013 DE 102013016311
(43) Veröffentlichungstag der Anmeldung: 03.06.2015
(73) Patentinhaber: KNORR-BREMSE Systeme für Nutzfahrzeuge GmbH, 80809 München (DE)
(72) Erfinder: Peschel, Michael, 82296 Schöngeising (DE); Klingner, Matthias, 82272 Moorenweis (DE); Blessing, Michael, 80687 München (DE)

(56) Entgegenhaltungen:
- WO-A1-2011/006928
- DE-A1-102008 035 370
- DE-A1-102011 112 360

## Beschreibung

Die Erfindung betrifft eine Scheibenbremse, insbesondere für ein Kraftfahrzeug, nach dem Oberbegriff des Anspruchs 1. So eine Scheibenbremse geht z.B. aus DE-A-10 2011 112 360 hervor.

Derartige Scheibenbremsen sind üblicherweise druckluftbetätigt und mit automatisch wirkenden, mechanischen Verschleißnachstellvorrichtungen ausgestattet. Diese Verschleißnachstellvorrichtungen wirken sehr zuverlässig und verkleinern ein zu groß gewordenes Lüftspiel. Sie sind in unterschiedlichen Ausführungen bekannt, wie z.B. mechanische Nachsteller mit automatischem Einregeln eines Reibepunkts. Dabei wird bei jeder Bremsbetätigung die Verschleißnachstellvorrichtung, z.B. durch ein Zustellelement einer Zuspannvorrichtung der Scheibenbremse, aktiviert. Bei Verschleiß von Bremsbelägen und Bremsscheibe erfolgt ein automatisches Nachstellen der Beläge mittels der Verschleißnachstellvorrichtung z.B. durch eine Verstellbewegung von längenveränderlichen Druckstempeln mit Nachstellspindeln bezeichnet werden.

Damit die automatische Nachstellung nicht ein zu kleines Lüftspiel einstellt, wird im Antrieb der Verschleißnachstellvorrichtung ein Spalt vorgehalten. Somit wird die Verschleißnachstellvorrichtung erst nach Überbrückung dieses Spalts, der auch als konstruktives Lüftspiel bezeichnet wird, angetrieben.

Ein Beispiel einer Verschleißnachstellvorrichtung beschreibt das Dokument DE 10 2004 037 771 A1. Dabei wird eine Antriebsdrehbewegung z.B. von einer Drehmoment-Begrenzungseinrichtung, beispielsweise mit einer Kugelrampe, über eine kontinuierlich wirkende Kupplung (Rutschkupplung) auf eine Nachstellspindel eines Druckstempels weitergeleitet.

Diese Nachstelleinrichtungen sind rotatorisch formschlüssig mit einer Nachstellspindel verbunden. Zwei oder mehr Nachstellspindeln sind üblicherweise über eine Synchroneinrichtung gekoppelt. Durch das Verdrehen der Nachstellspindeln werden diese um den Verschleißbetrag über ein Gewinde axial nachgeführt. Eine Antriebseinheit bildet ein Bindeglied zwischen Nachstelleinrichtung und Nachstellspindel. Der Kraftflussübergang von Antriebseinheit zur Nachstellspindel ist aufgrund von Fertigungstoleranzen spielbehaftet. Dieses Spiel kann dazu führen, dass die Nachstelleinrichtung einen Belagverschleiß "erkennt" und nachstellt, obwohl kein Belagverschleiß vorhanden ist.

Bei üblichen pneumatischen Scheibenbremsen sind die Nachstellspindeln rohrförmig ausgeführt (z.B. in DE 10 2004 037 771 A1 beschrieben) und die direkt damit verbundene Nachstelleinrichtung beinhaltet eine spielfreie Übertragung zur rohrförmigen Nachstellspindel. Die spielfreie Übertragung wird durch rotatorische Verspannung der Kraftübertragungselemente sichergestellt, wobei die Nachstelleinrichtung zum Teil in der rohrförmigen Nachstellspindel eingesetzt ist.

Für Nachstellspindeln, z.B. in Form einer Gewindestange, kann die oben genannte Lösung nicht oder nur mit erheblichem Aufwand für einen Antrieb der Nachstellspindel von außen verwendet werden. Die Übertragung der Rotationsbewegung von der Nachstelleinrichtung erfolgt über eine zusätzliche Antriebseinheit von außen auf die Nachstellspindel. D.h., dass die Toleranzen eines zusätzlichen Bauteils mit ausgeglichen werden müssen.

Die Aufgabe der vorliegenden Erfindung besteht daher darin, eine verbesserte Scheibenbremse zu schaffen, die die genannte Nachteile nicht oder in erheblichem Maße verringert aufweist.

Die Aufgabe wird durch eine Scheibenbremse mit den Merkmalen des Anspruchs 1 gelöst.

Es wird eine Scheibenbremse geschaffen, bei ein spielbedingtes Nachstellen unterbunden ist. Dazu ist die Antriebseinheit mit der mindestens einen Nachstellspindel über mindestens ein Spannfederelement spielfrei rotatorisch formschlüssig gekoppelt.

Eine erfindungsgemäße Scheibenbremse, vorzugsweise druckluftbetätigt, insbesondere für ein Kraftfahrzeug, ist mit einer Zuspannvorrichtung, vorzugsweise mit einem Drehhebel, mindestens einer Spindeleinheit mit mindestens einer Nachstellspindel, und einer Verschleißnachstellvorrichtung mit einer Nachstelleinrichtung versehen, welche mit der Zuspannvorrichtung, vorzugsweise mit dem Drehhebel, über einen Antrieb und mit der mindestens einen Nachstellspindel über eine Antriebseinheit gekoppelt ist, wobei die Antriebseinheit auf die Nachstellspindel aufgeschoben ist und über mindestens einen Koppelabschnitt mit der Nachstellspindel rotatorisch formschlüssig gekoppelt ist. Die Antriebseinheit ist mit der mindestens einen Nachstellspindel über mindestens ein Spannfederelement spielfrei rotatorisch formschlüssig gekoppelt.

Mit Hilfe des Spannfederelementes wird die außenliegende Antriebseinheit mit der innenliegenden Nachstellspindel rotatorisch federnd verspannt und somit ein spielbedingtes Nachstellen unterbunden.

Unter dem Begriff "rotatorisch verspannt" ist eine Verspannung der Antriebseinheit und der Nachstellspindel untereinander um eine gemeinsame Achse, z.B. die Spindelachse, zu verstehen.

Bei der Verschleißnachstellung erfolgt eine Verstellung des Bremsbelags/der Bremsbeläge in Richtung auf die Bremsscheibe zur Verkleinerung des Lüftspiels.

Das vorher festgelegte Lüftspiel ist z.B. das konstruktive Lüftspiel und ist von der Geometrie und Auslegung der Scheibenbremse bestimmt.

In einer Ausführung verspannt das mindestens eine Spannfederelement die Antriebseinheit gegen die Nachstellspindel rotatorisch um eine Spindelachse der Nachstellspindel.

Eine toleranzausgleichende Verspannung der Kraftübertragungselemente kann vorteilhaft vor, bei oder durch die Montage stattfinden und ist nicht mehr ein Bestandteil der Nachstelleinrichtung.

Weitere vorteilhafte Ausgestaltungen sind in den Unteransprüchen angegeben.

In einer weiteren Ausführung weist das mindestens eine Spannfederelement mindestens einen Kontaktabschnitt, welcher mit der Nachstellspindel rotatorisch formschlüssig gekoppelt ist, und mindestens einen Federkontaktabschnitt, welcher mit mindestens einer Kontaktfläche der Antriebseinheit in Kontakt steht, auf. Mit dem Spannfederelement wird eine einfache und einteilige Lösung erreicht.

Eine noch weitere Ausführung sieht vor, dass der mindestens eine Kontaktabschnitt mit einem Innenring bzw. Ring oder ringförmigen Körper fest verbunden ist. Damit ist eine rotatorisch formschlüssige Kopplung mit der Nachstellspindel gegeben.

In einer Ausführung ist das mindestens eine Spannfederelement als eine Art ebene Spiralfeder ausgebildet, wobei der mindestens eine Federkontaktabschnitt mit dem mindestens einen Kontaktabschnitt über einen federnden Spannabschnitt verbunden ist. So wird ein kompakter Aufbau erhalten.

Dazu ist dieser federnde Spannabschnitt in einer Ausführung mit einem Ende an dem Innenring fest angebracht und umgibt den Innenring umlaufend in einem Winkel kleiner 360°, beispielsweise etwa 330°, bis zu einem freien Federende des Spannabschnitts, welches den mindestens einen Federkontaktabschnitt aufweist.

In einer weiteren Ausführung weist der federnde Spannabschnitt abhängig von dem Winkel unterschiedliche Querschnitte auf. So kann z.B. der federnde Spannabschnitt abhängig von dem Winkel eine unterschiedliche radiale Breite aufweisen, wobei ein raumsparender Aufbau ermöglicht wird.

An dem Federende kann ein rechteckförmiger Vorsprung angeformt sein, welcher sich radial nach innen auf den Innenring zu erstreckt. Damit ergibt sich ein einfacher radialer Anschlag des freien Federendes des Spannabschnitts am Innenring.

In einer weiteren Ausführung ist der mindestens eine Federkontaktabschnitt als Vorspannschräge zur Zusammenwirkung mit einer Kontaktfläche der Antriebseinheit ausgebildet. Hiermit kann eine Verspannung bei der Montage ermöglicht werden.

In einer alternativen Ausführung weist das mindestens eine Spannfederelement einen Rasthaken auf, welcher mit dem mindestens einen Federkontaktabschnitt in einem vorgespannten Zustand des Spannfederelementes vor einer Montage verrastet ist und im zusammengebauten Zustand mit der Antriebseinheit automatisch entrastet ist. So kann die Verspannung vor der Montage erfolgen.

Eine weitere Ausführung sieht vor, dass der mindestens eine Federkontaktabschnitt mit dem mindestens einen Kontaktabschnitt über eine federnde Verbindung verbunden ist. Das ergibt einen kompakten Aufbau.

Eine noch weitere Ausführung sieht dabei vor, dass der mindestens eine Federkontaktabschnitt mit einem Flächenabschnitt einer Nut der Antriebseinheit und mit seitlichen Kontaktflächen der Nut, welche den Flächenabschnitt begrenzen, in Kontakt steht. Weiterhin ist ein Winkel zwischen gedachten Mittellinien eines Kontaktabschnitts und eines Federkontaktabschnitt des Spannfederelementes kleiner als ein Winkel zwischen gedachten Mittellinien eines Koppelabschnitts und einer Nut der Antriebseinheit. Damit wird vorteilhaft ermöglicht, dass eine Verspannung durch die unterschiedlichen Winkel bei der Montage ermöglicht wird.

In einer noch weiteren Ausführung ist die Nut der Antriebseinheit so ausgebildet, dass sie sich radial von der Außenseite der Antriebseinheit nach innen verjüngt. Zusätzlich kann der Flächenabschnitt der Nut ein Gefälle aufweisen, welches radial von der Außenseite der Antriebseinheit nach innen abfällt. Damit wird eine vorteilhaft einfache und wirksame Verspannung bei der Montage erreicht.

Die Scheibenbremse kann weiterhin zwei Spindeleinheiten mit jeweils einer Nachstellspindel aufweisen, wobei die Nachstellspindeln in einer Traverse in Gewinden eingesetzt sind, wobei die Verschleißnachstellvorrichtung eine Nachstelleinrichtung, einen Mitnehmer und eine Synchroneinrichtung umfasst, wobei jeweils eine oben beschriebene Antriebseinheit mit einer Nachstellspindel gekoppelt ist. Jede der Antriebseinheiten weist jeweils eine Verzahnung zur Zusammenwirkung mit der Synchroneinrichtung auf. Diese Verzahnung kann z.B. eine Kettenradverzahnung für eine Kette als Synchronmittel sein. Es ist aber auch möglich, dass die Verzahnung eine Stirnradverzahnung für ein Zahnradgetriebe als Synchronmittel ist. Damit werden zusätzliche Synchronräder an anderer Stelle eingespart.

In einer Ausführung ist die Synchroneinrichtung auf der Traverse angeordnet. Dies ergibt einen kompakten Aufbau, insbesondere wenn die Antriebseinheit direkt über die Verzahnung mit der Synchroneinheit zusammenwirkt.

Eine weitere Ausführung sieht vor, dass jede der Antriebseinheiten jeweils in einer Aufnahme der Traverse angeordnet ist. Dadurch wird Bauraum eingespart. Die Traverse kann auch in dieser Weise separat vorbestückt werden.

Es ist weiterhin vorgesehen, dass jede der Antriebseinheiten mindestens ein Spannfederelement aufweist, welches jeweils in einem Zwischenraum zwischen einem Boden der jeweiligen Antriebseinheit und einem Boden der zugehörigen Aufnahme angeordnet ist. Dabei kann das Spannfederelement je nach Ausführung bei der Montage durch Kontakt mit dem Boden der Aufnahme in der Traverse vorgespannt werden. Außerdem ist ein kompakter Aufbau möglich. Zudem ist das Spannfederelement in der Aufnahme in der Traverse aufgenommen.

In einer Ausführung ist die mindestens eine Nachstellspindel als Gewindestange ausgebildet. Dies ermöglicht einen kompakten Aufbau.

Es ist in einer weiteren Ausführung vorgesehen, dass das mindestens eine Spannfederelement aus einem flachen Federstahl als Stanz-/Biegeteil hergestellt ist. Dies ergibt eine einfache einteilige Ausführung dieses Bauteils.

Die Erfindung wird nun anhand beispielhafter Ausführungen mit Bezug auf die beigefügten Zeichnungen näher erläutert. Hierbei zeigen:
- Fig. 1: eine schematische Schnittansicht eines ersten Ausführungsbeispiels einer erfindungsgemäßen Scheibenbremse mit einer Verschleißnachstellvorrichtung;
- Fig. 2: eine schematische, perspektivische Schnittansicht einer Nachstellspindel eines zweiten Ausführungsbeispiels der erfindungsgemäßen Scheibenbremse;
- Fig. 3-3a: schematische Perspektivansichten eines ersten Ausführungsbeispiels einer erfindungsgemäßen Antriebseinheit;
- Fig. 3b-3d: schematische Ansichten eines Spannfederelementes des ersten Ausführungsbeispiels der erfindungsgemäßen Antriebseinheit nach Fig. 3-3a;
- Fig. 4-4a: schematische Perspektivansichten von Montagewerkzeugen;
- Fig. 5-5a: schematische Perspektivansichten eines zweiten Ausführungsbeispiels der erfindungsgemäßen Antriebseinheit;
- Fig. 6: eine schematische Perspektivansicht eines dritten Ausführungsbeispiels der erfindungsgemäßen Antriebseinheit;
- Fig. 7-8: schematische Perspektivansichten von Varianten eines Spannfederelementes;
- Fig. 9: eine schematische Perspektivansicht eines vierten Ausführungsbeispiels der erfindungsgemäßen Antriebseinheit; und
- Fig. 10: eine vergrößerte Darstellung des Bereichs X der Fig. 9.

Die Begriffe "oben" und "unten" beziehen sich auf die jeweilige Figur.

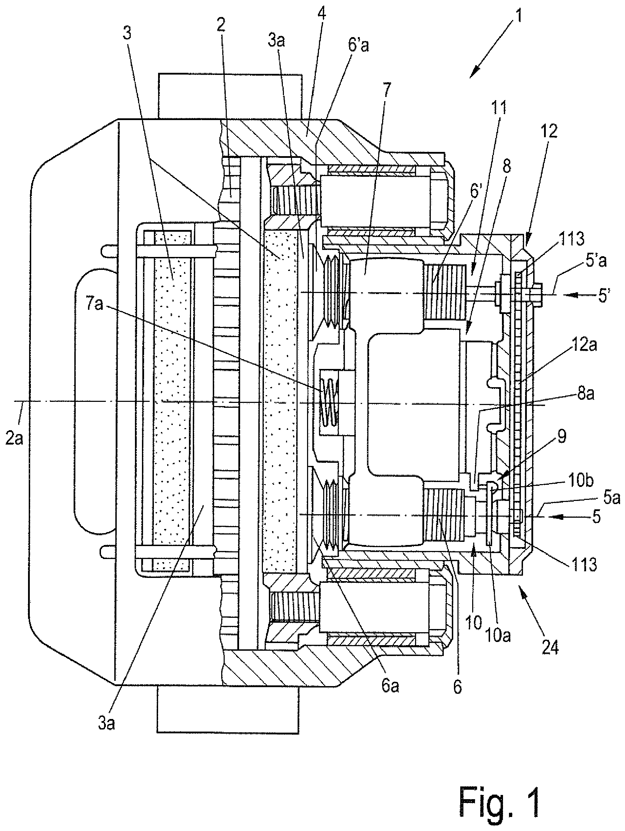

Fig. 1 zeigt eine schematische Schnittansicht eines ersten Ausführungsbeispiels einer erfindungsgemäßen Scheibenbremse 1 mit einer Verschleißnachstellvorrichtung 24 in einer schematischen Schnittansicht.

Die Scheibenbremse 1 ist hier als zweistempelige Bremse mit zwei Spindeleinheiten 5, 5' mit jeweils einer Spindelachse 5a, 5'a gezeigt. Ein Bremssattel 4, hier als Schwimmsattel ausgeführt, übergreift eine um eine Bremsscheibendrehachse 2a drehbare Bremsscheibe 2, an welcher beidseitig jeweils ein Bremsbelag 3 mit einem jeweiligen Bremsbelagträger 3a angeordnet ist.

Der auf der rechten Seite angeordnete Bremsbelag 3 wird zuspannseitiger Bremsbelag 3 genannt und steht mit seinem Bremsbelagträger 3a mit den Spindeleinheiten 5, 5' an Enden von Nachstellspindeln 6, 6' über Druckstücke 6a, 6'a in Verbindung. Der andere Bremsbelag 3 ist auf der anderen Seite der Bremsscheibe 2 im Bremssattel 4 festgelegt und wird als reaktionsseitiger Bremsbelag 3 bezeichnet. Die Nachstellspindeln 6, 6' weisen jeweils ein Außengewinde auf sind jeweils in einer Traverse 7 verdrehbar angeordnet. Die Traverse 7, und somit die Nachstellspindeln 6, 6', sind von einem Drehhebel 8 parallel zur Bremsscheibendrehachse 2a betätigbar. Eine Rückstellfeder 7a dient zur Rückstellung der Traverse 7 beim Lösen der Bremse.

Ein Abstand zwischen den Bremsbelägen 3 und der Bremsscheibe 2 wird als Lüftspiel bezeichnet. Infolge von Belag- und Scheibenverschleiß wird dieses Lüftspiel größer. Wenn dies nicht kompensiert wird, kann die Scheibenbremse 1 ihre Spitzenleistung nicht erreichen, da ein Betätigungshub der Betätigungsmechanik, d.h. hier der Betätigungshub bzw. ein Schwenkwinkel des Drehhebels 8, nicht mehr ausreicht.

Die Verschleißnachstellvorrichtung 24 ist zur Nachstellung bzw. Einstellung des Lüftspiels vorgesehen. Wenn ein zu großes Lüftspiel vorliegt, erfolgt durch die Verschleißnachstellvorrichtung 24 eine automatische Nachstellung durch Verdrehen der Nachstellspindeln 6, 6'.

Die Verschleißnachstellvorrichtung 24 umfasst hier eine Nachstelleinrichtung 10, einen Mitnehmer 11 und eine Synchroneinrichtung 12.

Die Nachstelleinrichtung 10 steht über den Betätigungsantrieb 9 mit dem Drehhebel 8 in Zusammenwirkung. Der Betätigungsantrieb 9 umfasst einen Betätiger 8a, welcher mit dem Drehhebel 8 verbunden ist, und ein Antriebselement 10a der Nachstelleinrichtung 10, das z.B. eine Schaltgabel 10b aufweist.

Die Scheibenbremse 1 kann unterschiedliche Kraftantriebe aufweisen. Der Drehhebel 8 wird hier z.B. pneumatisch betätigt. Zu Aufbau und Funktion einer pneumatischen Scheibenbremse 1 wird auf die entsprechende Beschreibung der DE 197 29 024 C1 verwiesen.

Die Nachstelleinrichtung 10 ist hier als mechanische Nachstelleinrichtung ausgebildet und mit der Nachstellspindel 6 der einen Spindeleinheit 5 der beiden Spindeleinheiten 5, 5' rotatorisch formschlüssig verbunden. Durch das Verdrehen der Nachstellspindeln 6, 6' werden diese um den Verschleißbetrag über das Gewinde in der Traverse 7 axial nachgeführt.

Die Synchroneinrichtung 12 gewährleistet eine synchrone Drehbewegung der beiden Nachstellspindeln 6, 6' der Spindeleinheiten 5 und 5'durch ein Synchronmittel 12a. Die Drehbewegungen erfolgen bei Verschleißnachstellvorgängen und bei manuellen Einstellungen, z.B. bei Belagwechsel. In diesem Ausführungsbeispiel sind die Nachstellspindeln 6, 6' über eine Kette als Synchronmittel 12a gekoppelt.

Bei der Scheibenbremse nach Fig.1 sind die Nachstellspindeln 6, 6' als Gewinderohre ausgebildet, wobei die Nachstelleinrichtung 10 in der einen Nachstellspindel 6 der Spindeleinheit 5 eingesetzt ist. Dabei weist die Nachstelleinrichtung 10 eine nicht näher bezeichnete Nachstellerwelle auf, die in ihrem oberen, zuspannseitigen Endbereich jeweils mit einer Antriebseinheit 113 versehen ist. Die Nachstellerwelle ist an ihrem anderen Ende mit der zugehörigen Nachstellspindel 6 in nicht näher beschriebener Weise drehfest gekoppelt. Im Wesentlichen entspricht die Nachstelleinrichtung 10 einem üblichen Nachsteller, dessen Aufbau und Funktion z.B. in der DE 10 2004 037 771 A1 ausführlich beschrieben sind.

Der Mitnehmer 11 weist eine nicht näher bezeichnete Mitnehmerwelle auf, welche in der Nachstellspindel 6' der anderen Spindeleinheit 5' eingesetzt und in nicht näher beschriebener Weise mit der Nachstellspindel 6' drehfest gekoppelt ist.

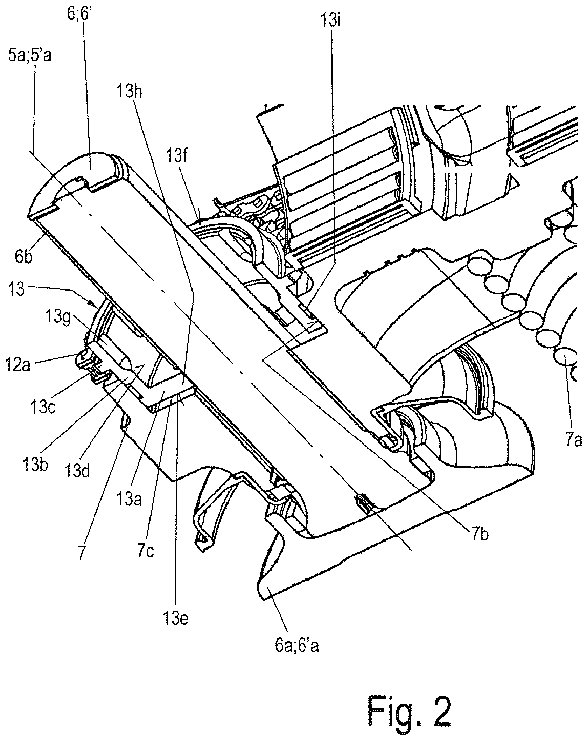

In Fig. 1 ist die Synchroneinrichtung 12 an den zuspannseitigen Enden der Spindeleinheiten 5, 5' unter einem nicht näher bezeichneten Deckel des Bremssattels 4 angeordnet. Das Synchronmittel 12a steht jeweils mit einer der beiden Antriebseinheiten 113 in Zusammenwirkung. Jede Antriebseinheit 113 ist dazu entsprechend ausgebildet, z.B. als Kettenrad oder mit einer Verzahnung 13c (siehe z.B. Fig. 2), und steht mit einer jeweiligen Nachstellspindel 6, 6 in drehfester Zusammenwirkung. Die Mitnehmerwelle ist in ihrem oberen, zuspannseitigen Endbereich wie die Nachstellerwelle mit einer Antriebseinheit 113 versehen. Die Antriebseinheiten 113 bilden hier jeweils ein Bindeglied zwischen einer Nachstellspindel 6, 6' und der Synchroneinrichtung 12. Jede Antriebseinheit 113 ist für eine spielfreie Übertragung von Drehmomenten mit einem Spannfederelement ausgebildet, was unten noch näher erläutert wird.

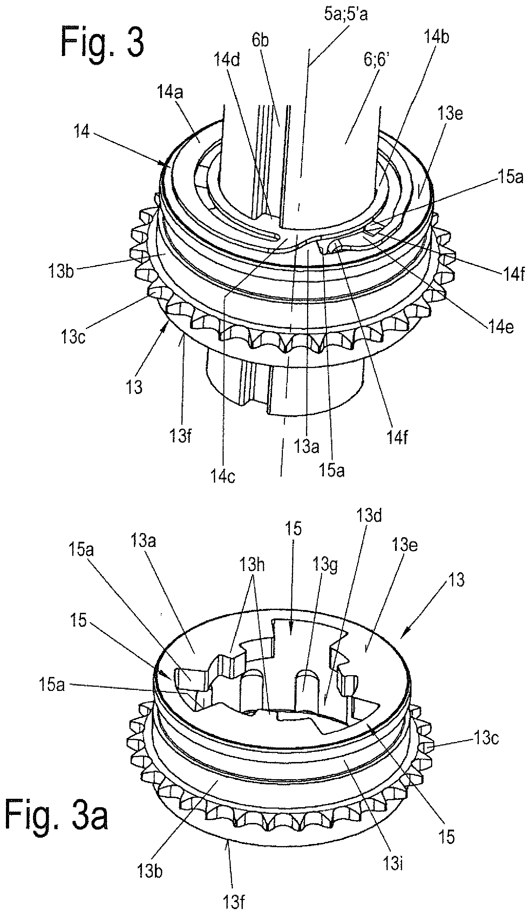

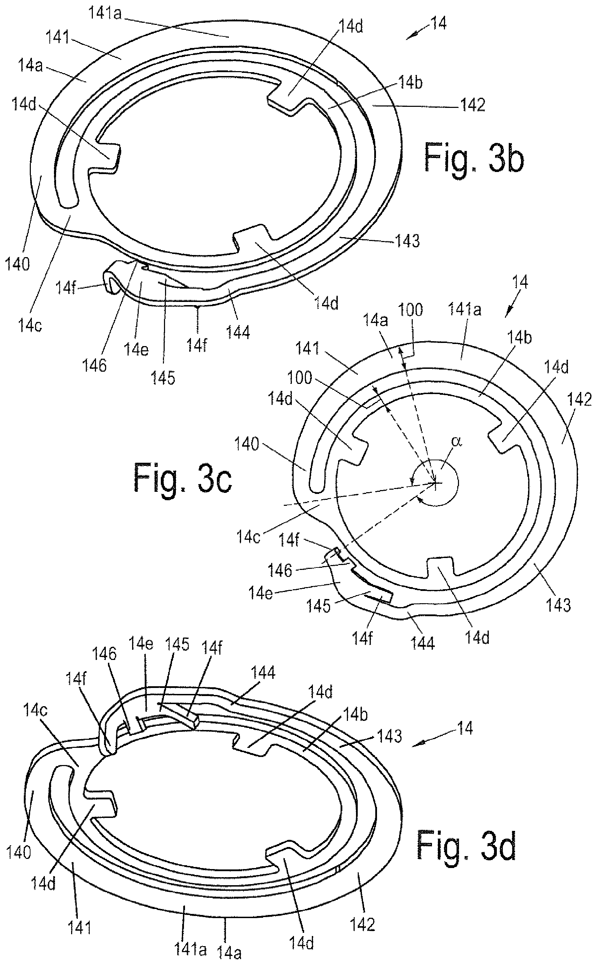

Fig. 2 zeigt eine schematische, perspektivische Schnittansicht einer Nachstellspindel 6, 6' eines zweiten Ausführungsbeispiels der erfindungsgemäßen Scheibenbremse 1. In Fig. 3-3a sind schematische Perspektivansichten eines ersten Ausführungsbeispiels einer erfindungsgemäßen Antriebseinheit 13 dargestellt. Fig. 3 zeigt dabei die Antriebseinheit 13 auf der Nachstellspindel 6, 6' von der Bremsbelagseite her gesehen, und Fig. 3a stellt die Antriebseinheit 13 von der Bremsbelagseite her gesehen dar.

In diesem zweiten Ausführungsbeispiel sind die Nachstellspindeln 6, 6' nicht als Gewinderohre, sondern als Gewindestangen ausgeführt. Eine der beiden Nachstellspindeln 6, 6' ist hier im Längsschnitt in der Traverse 7 auf deren linker Seite eingeschraubt dargestellt. Die andere Nachstellspindel 6, 6' ist spiegelbildlich auf der rechten Seite leicht vorstellbar. Das Synchronmittel 12a der Synchroneinrichtung 12 ist in diesem Ausführungsbeispiel auf der Traverse 7 angeordnet und wirkt mit zwei Antriebseinheiten 13 zusammen. Von diesen zwei Antriebseinheiten 13 ist hier nur eine dargestellt, die andere spiegelbildlich auf der rechten Seite ist leicht vorstellbar.

Die Beschreibung der in Fig. 2, 3, 3a gezeigten Antriebseinheit 13 betrifft auch die andere, nicht gezeigte Antriebseinheit 13.

Die gezeigte Antriebseinheit 13 bildet hier ein Bindeglied zwischen der Nachstelleinrichtung 10 der Verschleißnachstellvorrichtung 24 und der gezeigten einen Nachstellspindel 6, 6' von zwei Nachstellspindeln 6, 6'. Die Nachstelleinrichtung 10 ist hier nicht gezeigt. Sie ist z.B. auf das freie Ende der Nachstellspindel 6, 6' ganz oder teilweise aufgeschoben oder darüber angeordnet, was leicht vorstellbar ist. Dabei ist die Nachstelleinrichtung 10 z.B. über ein Hohlwellenelement mit der Antriebseinheit 13 gekoppelt. Eine Momentenübertragung bei einem Nachstellvorgang von der Nachstelleinrichtung 10 auf die gezeigte Nachstellspindel 6, 6' erfolgt über die Antriebseinheit 13 direkt auf die mit dieser gekoppelte Nachstellspindel 6, 6' und gleichzeitig über das Synchronmittel 12a auf die andere der beiden Antriebseinheiten 13 und somit auf die andere der beiden Nachstellspindeln 6, 6'. Dabei bildet die andere Antriebseinheit 13 ein Bindeglied zwischen dem Synchronmittel 12a der Synchroneinrichtung 12 und der anderen Nachstellspindel 6, 6' der beiden Nachstellspindeln 6, 6'.

Die Antriebseinheit 13 ist kreiszylindrisch mit einem Boden 13a mit einer Bodenaußenseite 13f und einer umlaufenden Wand 13b mit einer Wandoberseite 13f ausgebildet. Im eingebauten Zustand der Antriebseinheit 13 weist die Wandoberseite 13f mit der offenen Seite der Antriebseinheit 13 zur Zuspannseite der Scheibenbremse 1.

Die Wand 13b ist in ihrer axialen Ausdehnung in zwei Abschnitte aufgeteilt, welche die axiale Länge der Antriebseinheit 13 in etwa zwei gleich lange Abschnitte aufteilen. Ein oberer Abschnitt ist an der Außenseite der Wand 13b mit einer umlaufenden Verzahnung 13c, z.B. einen Kettenradverzahnung, zur Zusammenwirkung mit dem Synchronmittel 12a versehen. Der dem Boden 13a benachbarte untere Abschnitt der umlaufenden Wand 12b ist im eingebauten Zustand der Antriebseinheit 13 (Fig. 2) in einer Aufnahme 7b der Traverse 7 aufgenommen. Die Bodenaußenseite 13f ist von einem Boden der Aufnahme 7b beabstandet und legt mit diesem einen Zwischenraum 7c fest. Die Aufnahme 7b ist auf der Zuspannseite der Traverse 7 in die Traverse 7 eingeformt. Der untere Abschnitt der Wand 13b der Antriebseinheit 13 weist an der Außenseite eine Nut 13i, z.B. für eine umlaufende Dichtung, auf. Mit dieser nicht dargestellten Dichtung wird die Antriebseinheit 13 gegenüber der Aufnahme 7b der Traverse 7 abgedichtet. Diese Dichtung kann z.B. ein O-Ring sein.

In eine Innenseite 13d der umlaufenden Wand 13b sind in dem oberen Abschnitt der Wand 13b sich von der Oberseite 13f her nach unten axial erstreckende Koppelausnehmungen 13g eingeformt, welche zur Zusammenwirkung mit der Nachstelleinrichtung 10 oder einem Abtriebsteil, z.B. ein Hohlwellenelement der Nachstelleinrichtung 10; vorgesehen sind.

Der Boden 13a besitzt eine zentrale Öffnung mit radial zum Öffnungsmittelpunkt, d.h. nach innen, hervorstehenden zahnförmigen Koppelabschnitten 13h auf. In den Boden 13a ist jeweils eine Ausnehmung 15 am Rand liegend eingeformt, welche einem Koppelabschnitt 13h gegenüberliegt. D.h., eine gedachte Mittellinie eines Koppelabschnitts 13h ist auch die gedachte Mittellinie der gegenüberliegenden Ausnehmung 15. Ein Winkel zwischen diesen beiden gedachten Mittellinien beträgt somit 180°. In diesem Ausführungsbeispiel besitzt die Antriebseinheit 13 drei Koppelabschnitte 13h und drei Ausnehmungen 15. Jede Ausnehmung 15 ist eine Art Kreisringabschnitt, der seitlich durch sich radial erstreckende Kontaktflächen 15a begrenzt ist. Die Koppelabschnitte 13h und Ausnehmungen 15 sind mit regelmäßigen Winkelabständen angeordnet. In diesem Fall betragen die Winkel zwischen den gedachten Mittellinien zweier Koppelabschnitte 13h jeweils 120°, ebenso jeder Winkel zwischen den gedachten Mittellinien zweier Ausnehmungen 15.

Die Nachstellspindel 6, 6' erstreckt sich in Längsrichtung durch die Öffnung im Boden 13a der Antriebseinheit 13 hindurch und ist mit der Antriebseinheit 13 derart rotatorisch formschlüssig gekoppelt, dass die zahnförmigen Koppelabschnitte 13h mit jeweiligen Nuten 6b der Nachstellspindel 6, 6' formschlüssig in Eingriff stehen. Die Nuten 6b der Nachstellspindel 6, 6' erstrecken sich in Längsrichtung der Nachstellspindel 6, 6'. Eine axiale Verschiebbarkeit aufgrund eines Nachstellweges zwischen der Nachstellspindel 6, 6' und der jeweiligen Antriebseinheit 13 ist somit gewährleistet.

Die rotatorische, formschlüssige Kopplung zwischen der Antriebseinheit 13 und der zugehörigen Nachstellspindel 6, 6' ist aufgrund von Fertigungstoleranzen spielbehaftet. Dieses Spiel ist durch den Einsatz eines Spannfederelementes 14 (Fig. 3) aufgehoben bzw. ausgeglichen. Mit Hilfe des Spannfederelementes 14 wird die zur Nachstellspindel 6, 6' außen liegende Antriebseinheit 13 mit der innen liegenden Nachstellspindel 6, 6' rotatorisch um die Spindelachse 5a, 5'a der Nachstellspindel 6, 6' federnd verspannt. Ein spielbedingtes Nachstellen wird somit unterbunden.

Das Spannfederelement 14 ist auf der Bodenaußenseite 13e des Bodens 13a der Antriebseinheit 13 angeordnet und befindet sich im eingebauten Zustand der Antriebseinheit 13 in dem Zwischenraum 7c in der Aufnahme 7b der Traverse 7 unter der Antriebseinheit 13.

Fig. 3b-3d zeigen dazu schematische Ansichten des Spannfederelementes 14 des ersten Ausführungsbeispiels der erfindungsgemäßen Antriebseinheit nach Fig. 3-3a. In Fig. 3b ist eine schematische Perspektivansicht von oben dargestellt. Fig. 3c zeigt eine schematische Draufsicht, und Fig. 3d zeigt eine schematische Perspektivansicht von unten.

Das Spannfederelement 14 ist eine Art ebene Spiralfeder und umfasst in dieser Ausführung einen Spannabschnitt 14a, einen Innenring 14b, mindestens einen Kontaktabschnitt 14d und mindestens einen Federkontaktabschnitt 14f.

Der Innenring 14b weist den mindestens einen Kontaktabschnitt 14d auf, welcher wie der Koppelabschnitt 13h der Antriebseinheit 13 zahnförmig ausgebildet ist und auch in gleicher Weise nach innen vom Innenring 14b hervorsteht. In der hier gezeigten beispielhaften Ausführungen sind drei Kontaktabschnitte 14d gleichmäßig am inneren Umfang des Innenrings 14b verteilt vorgesehen. Der Innenring 14b ist als ein vollständiger Ring mit 360° ausgebildet und weist eine konstante radiale Breite 100 auf.

Der Spannabschnitt 14a ist mit einem Ende über eine Verbindung 14c an einer Stelle des Außenumfangs des Innenrings 14b mit diesem verbunden. Diese Stelle befindet sich hier zwischen zwei Kontaktabschnitten 14d, wobei die Verbindung 14c näher an dem linken als an dem rechten Kontaktabschnitt 14d angeordnet ist. Das andere Ende des Spannabschnitts 14a ist als freies Ende mit einem Federende 14e ausgebildet, an welchem ein Federkontaktabschnitt 14f angebracht ist, der unten noch näher beschrieben wird.

Der Spannabschnitt 14a umgibt den Innenring 14b von dem Ende an der Verbindung 14c bis zu dem freien Federende 14e des Spannabschnitts 14a umlaufend in einem Winkel α kleiner 360°, z.B. von etwa 330°. Dabei weist der Spannabschnitt 14a unterschiedliche radiale Breiten 110 auf, welche sich abhängig von dem Winkel α in aufeinanderfolgenden Spannabschnittsbereichen 140, 141, 142, 143, 144 stufenlos verändern. Mit anderen Worten, der Querschnitt des Spannabschnitts 14a ist abhängig von dem Winkel α unterschiedlich.

In Fig. 3c sind die unterschiedlichen radialen Breiten 110 des Spannabschnitts 14a dargestellt. So ist beginnend an der Verbindung 14c die radiale Breite 110 eines ersten Spannabschnittsbereichs 140 in diesem Beispiel etwa 1,5mal so groß wie die radiale Breite 100 des Innenrings 14b. Die radiale Breite 110 des Spannabschnitts 14a nimmt von dem ersten Spannabschnittsbereich 140 an im Uhrzeigersinn zu, wobei sie in einem zweiten Spannabschnittsbereich 141 in einem Maximum 141a etwa 2,5mal so groß wie die radiale Breite 100 des Innenrings 14b ist. Dieses Maximum 141 a liegt hier ungefähr diametral zu dem Federende 14e. Weiterhin verkleinert sich die radiale Breite 110 des Spannabschnitts 14a nun im Uhrzeigersinn von dem zweiten Spannabschnittsbereich 141 zu einem dritten Spannabschnittsbereich 142, in welchem sie etwa das Doppelte der radialen Breite 100 des Innenrings 14b beträgt. Die radiale Breite 110 des Spannabschnitts 14a verjüngt sich weiter im Uhrzeigersinn bis zu einem vierten Spannabschnittsbereich 143 mit einer radialen Breite 110 mit dem etwa 1,5fachen der radialen Breite 100 des Innenrings 14b und verjüngt sich in einem anschließenden fünften Spannabschnittsbereich 144 auf eine radiale Breite 110 des Spannabschnitts 14a, welche dort der radialen Breite 100 des Innenrings 14b entspricht.

Das Federende 14e ist mit zwei in Umlaufrichtung gegenüberliegenden Federkontaktabschnitten 14f versehen. Die Federkontaktabschnitte 14f sind jeweils nach unten aus der Ebene von Spannabschnitt 14a und Innenring 14b herausgebogen und stehen aus dieser Ebene sich in eine Ausnehmung 15 des Bodens 13a der Antriebseinheit 13 erstreckend hervor, was in den Figuren 3b und 3d deutlich zu erkennen ist. Die Federkontaktabschnitte 14f sind hier zwischen dem Federende 14e des Spannabschnitts 14a und dem Innenring 14b in Nachbarschaft der Verbindung 14c angeordnet. Der linke Federkontaktabschnitt 14f weist um ca. 90° nach unten und liegt der Verbindung 14c gegenüber. Der rechte Federkontaktabschnitt 14f erstreckt sich gegen den Uhrzeigersinn und ist über eine Verbindung 145 an dem Federende 14e in einem Winkel kleiner als 90° nach unten abgebogen.

An dem Federende 14e ist in Nachbarschaft des linken Federendes 14f ein rechteckförmiger Vorsprung 146 angeformt, welcher sich radial nach innen auf den Innenring 14b zu erstreckt, wobei ein radialer Anschlag zwischen dem freien Federende 14e und dem Innenring 14b gebildet ist.

Im zusammengebauten Zustand von Antriebseinheit 13 und Spannfederelement 14 wie in Fig. 3 gezeigt, umgibt der Innenring 14b des Spannfederelementes 14 die Nachstellspindel 6, 6', wobei der mindestens eine Kontaktabschnitt 14d in rotatorisch formschlüssigen Eingriff mit der Nut 6b der Nachstellspindel 6, 6' wie die Koppelabschnitte 13h der Antriebseinheit 13 steht. Dabei erstrecken sich die Federkontaktabschnitte 14f in eine der Ausnehmungen 15 des Bodens 13a der Antriebseinheit 13, wobei der der Verbindung 14c abgewandte Federkontaktabschnitt 14f mit der zugehörigen seitlichen Kontaktfläche 15a der Ausnehmung 15 in Kontakt steht.

Aufgrund der Federkraft des Spannabschnitts 14a wird der der Verbindung 14c abgewandte Federkontaktabschnitt 14f gegen die zugehörige seitliche Kontaktfläche 15a der Ausnehmung 15 gedrückt. Dabei wird auf die Antriebseinheit 13 eine Kraft eingeleitet, die ein Moment der Antriebseinheit 13 um die Spindelachse 5a, 5'a im Gegenuhrzeigersinn in Fig. 3 erzeugt. Gleichzeitig bewirkt die rotatorisch formschlüssige Kopplung des Kontaktabschnitts 14d mit der Nachstellspindel 6, 6' ein Moment auf die Nachstellspindel 6, 6' im Uhrzeigersinn. Dadurch wird eine rotatorische und toleranzausgleichende Verspannung von Antriebseinheit 13 und Nachstellspindel 6, 6' bewirkt, welche die oben erwähnte Spielfreiheit ergibt.

Das Spannfederelement 14 ist z.B. aus einem flachen Federstahl als Stanz-/Biegeteil hergestellt.

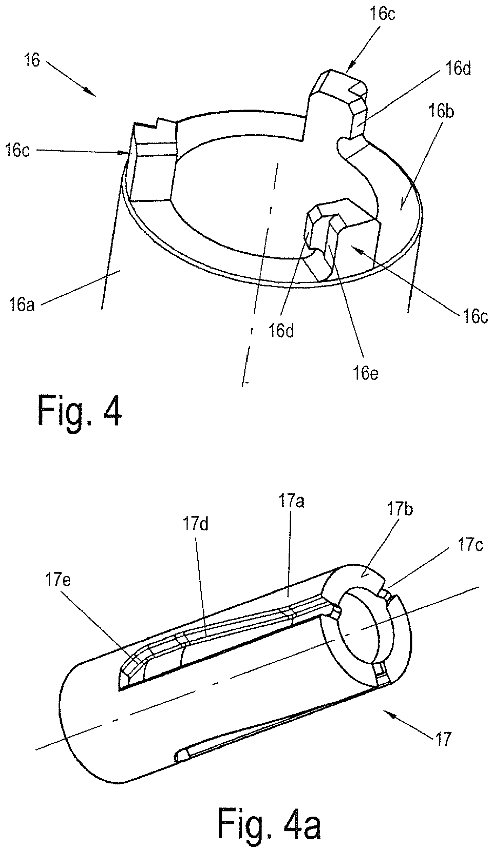

Fig. 4-4a zeigen schematische Perspektivansichten von Montagewerkzeugen 16, 17.

Das Montagewerkzeug 16 nach Fig. 4 ist mit einem rohrförmigen Körper 16a mit einem kreisförmigen Querschnitt ausgebildet, dessen Innendurchmesser zum Aufschieben auf die Nachstellspindel 6, 6' angepasst ist. An einer Stirnseite 16b des Körpers 16a stehen hier drei Spannfinger 16c hervor. Jeder Spannfinger 16c weist eine radiale Dicke wie die Wand des rohrförmigen Körpers 16a auf. An einem Seitenabschnitt jedes Spannfingers 16c ist zur Innenseite des rohrförmigen Körpers 16a hin ein in Umfangsrichtung hervorstehender Innenvorsprung 16d angeformt, dessen radiale Dicke etwa halb so groß ist wie die radiale Dicke des Spannfingers 16c, wobei die andere Hälfte dieses Seitenabschnitts jedes Spannfingers 16c eine Seitenfläche 16e bildet, die zur Innenseite hin von dem Innenvorsprung in Umfangsrichtung überragt wird. Eine Umfangsabschnittslänge des Innenvorsprungs 16d ist etwa ein Viertel länger als eine Umfangsabschnittslänge des Spannfingers 16c. In dieser Ausführung stehen die Innenvorsprünge 16d im Uhrzeigersinn hervor (von der Stirnseite 16b her gesehen).

Die toleranzausgleichende Verspannung wird vor, bei oder durch die Montage der Antriebseinheit 13 und des Spannfederelementes 14 in die Traverse 7 mit dem Montagewerkzeug 16, 17 vorgenommen.

Dazu werden die Antriebseinheit 13 und das Spannfederelement 14 von der Zuspannseite her auf die Nachstellspindel 6, 6' (Fig. 2) geschoben. Weiterhin wird von der Zuspannseite her das Montagewerkzeug 16 auf die Nachstellspindel 6, 6' so geschoben, dass die Stirnseite 16b mit den Spannfingern 16c in die Antriebseinheit 13 gelangt und die Spannfinger 16c in die Ausnehmungen 15 des Bodens 13a eingeführt werden können. Das Spannfederelement 13 wird nun durch das Montagewerkzeug 16 durch Verdrehen auf Spannung gebracht. Dies erfolgt dadurch, dass einer der Spannfinger 16c mit dem Federkontaktabschnitt 14f (in Fig. 3 derjenige, welcher der Verbindung 14c am nächsten liegt) in Eingriff kommt und den Spannabschnitt 14a des Spannfederelementes 14 gegen den Innenring 14b, der mit dem Kontaktabschnitt 14d in der Nut 6b der Nachstellspindel 6, 6' drehfest angeordnet ist, so spannt, dass der andere Federkontaktabschnitt 14f in die Ausnehmung 15 eingeführt werden kann und mit der Kontaktfläche 15a in Kontakt kommt (Fig. 3). Dann wird das Montagewerkzeug 16 wieder von der Nachstellspindel 6, 6' abgezogen und die Antriebseinheit 13 ist durch das Spannfederelement 14 gegen die Nachstellspindel 6, 6' rotatorisch verspannt, indem der andere Federkontaktabschnitt 14f gegen die Kontaktfläche 15a durch den Spannabschnitt 14a vorgespannt ist. Dabei werden die Nachstellspindel 6, 6' und die mit ihr verspannte Antriebseinheit 13 in die Traverse 7 montiert.

Alternativ besteht auch die Möglichkeit, das Spannfederelement 14 und die Antriebseinheit 13 auf dem anderen Montagewerkzeug 17 (Fig. 4a) gegeneinander zu verdrehen und dann im vorgespannten Zustand auf die Nachstellspindel 6, 6' zu schieben.

Das Montagewerkzeug 17 weist einen rohrförmigen Körper 17a mit kreisrundem Querschnitt auf, dessen Außendurchmesser so ausgeführt ist, dass die Antriebseinheit 13 auf das Montagewerkzeug 17 aufgeschoben werden kann. In der Wand des Körpers 17a sind drei Führungsnuten 17c eingeformt, die sich von einer Stirnseite 17b des Körpers 17a her über etwa mehr als drei Viertel der Länge des Körpers 17a erstrecken. Die Führungsnuten 17c weisen an der Stirnseite 17b die kleinste Breite auf, wobei ein kurzer Vorsprung von der Stirnseite 17b her abgerundet hervorsteht. Die Führungsnuten 17c weiten sich dann nach etwa einem Viertel ihrer Länge auf einer Seite mit einer Schräge 17d auf, die dann in einen zu der anderen Seite kurzen parallelen Abschnitt übergeht und in einem Bogen in ein Ende 17e der Führungsnut 17c in deren anfängliche Breite endet. Die andere Seite der Führungsnuten 17c verläuft als Gerade parallel zu einer gedachten Mittellinie des Körpers 17a.

Zum Gegeneinanderverspannen werden die Antriebseinheit 13 und das Spannfederelement 14 auf das Montagewerkzeug 17 aufgeschoben, wobei Koppelabschnitte 13h der Antriebseinheit 13 und die Kontaktabschnitte 14d des Spannfederelementes 14 in den Führungsnuten 17c eingeschoben und wie in der Nachstellspindel 6, 6' geführt sind. Durch die Aufweitung der Führungsnuten 17c ist es möglich, Antriebseinheit 13 und Spannfederelement 14 so gegeneinander zu verdrehen, dass eine gegenseitige Verspannung erreicht wird, wobei der andere Federkontaktabschnitt 14f des Spannfederelementes 14 in die Ausnehmung 15 eingeführt werden kann und mit der Kontaktfläche 15a in Kontakt kommt (Fig. 3). In diesem vorgespannten Zustand kann dann die Antriebseinheit 13 im vorgespannten Zustand mit dem Spannfederelement 14 auf die Nachstellspindel 6, 6' geschoben werden. Dabei wird das Montagewerkzeug 17 mit der darauf befindlichen Antriebseinheit 13 und dem Spannfederelement 14 mit der Stirnseite 17b auf die zuspannseitige Stirnseite der Nachstellspindel 6, 6' so aufgesetzt, dass die von der Stirnseite 17b des Montagewerkzeugs 17 abgerundeten hervorstehenden kurzen Vorsprünge in die Nuten 6b der Nachstellspindel 6, 6' eingreifen und somit ein Aufschieben von Antriebseinheit 13 und Spannfederelement 14 auf die Nachstellspindel 6, 6' erleichtern bzw. ermöglichen.

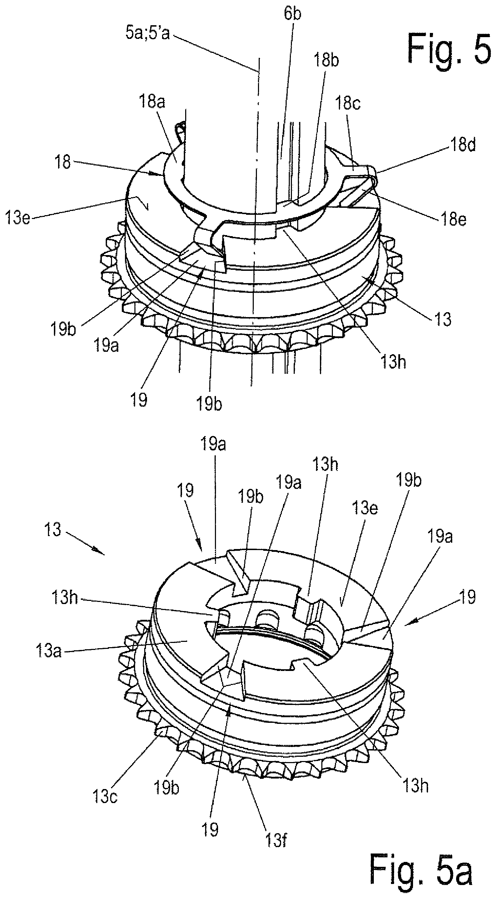

Fig. 5-5a zeigen schematische Perspektivansichten eines zweiten Ausführungsbeispiels der erfindungsgemäßen Antriebseinheit 13, wobei Fig. 5 die Antriebseinheit 13 auf der Nachstellspindel 6, 6' von der Bremsbelagseite her gesehen und Fig. 3a die Antriebseinheit 13 von der Bremsbelagseite her gesehen darstellt.

Die folgenden Beschreibungen gelten natürlich auch für beide Antriebseinheiten 13 bei der zweistempeligen Scheibenbremse 1.

In dem zweiten Ausführungsbeispiel ist die Antriebseinheit 13 mit einem Spannfederelement 18 versehen und an dieses angepasst ausgebildet. Das Spannfederelement 18 umfasst einen Ring 18a mit mindestens einem Kontaktabschnitt 18b und mindestens einen Federkontaktabschnitt 18e. Der Ring 18a umgibt im zusammengebauten Zustand nach Fig. 5 die Nachstellspindel 6, 6', wobei hier drei Kontaktabschnitte 18b zum Mittelpunkt des Rings 18a radial vorstehen und mit einer jeweiligen Nut 6b der Nachstellspindel 6, 6' in Eingriff stehen. An der Außenseite des Rings 18a sind hier drei Federkontaktabschnitte 18e jeweils über Verbindungen 18c und 18d federnd an dem Ring 18a angebracht. Die Verbindungen 18c stehen radial vom Ring 18a nach außen in der gleichen Ebene des Rings 18a hervor. Ihre äußeren Enden gehen jeweils in die nach unten und zur Spindelachse 5a, 5'a hin gebogene Verbindung 18d über, an welcher jeweils der längliche Federkontaktabschnitt 18e angeformt ist. Jeder Federkontaktabschnitt 18e ist so nach unten zur Spindelachse 5a, 5'a hin geneigt und steht jeweils mit einer Nut 19 in dem Boden 13a der Antriebseinheit 13 in Kontakt. Die Federkontaktabschnitte 18e werden auch als Spannlaschen bezeichnet.

Das Spannfederelement 18 ist z.B. ein Stanz-/Biegeteil aus flachem Federstahl.

Die Federkontaktabschnitte 18e sind in Bezug auf die Kontaktabschnitte 18b nicht diesen jeweils direkt gegenüber angeordnet, sondern in einem Winkel weniger als 180°, z.B. 160-170°. D.h., zwischen einer gedachten Mittellinie eines Kontaktabschnitts 18b und einer gedachten Mittellinie des gegenüberliegenden Federkontaktabschnitts 18e liegt ein Winkel von weniger als 180°. Mit anderen Worten, ein Winkel zwischen gedachten Mittellinien eines Kontaktabschnitts 18b und eines Federkontaktabschnitt 18e des Spannfederelementes 18 ist kleiner als ein Winkel zwischen gedachten Mittellinien eines Koppelabschnitts 13h und einer Nut 19 der Antriebseinheit 13.

Der Boden 13a der Antriebseinheit 13 weist in diesem zweiten Ausführungsbeispiel im Gegensatz zu dem ersten Ausführungsbeispiel nach Fig. 3a drei Nuten 19 verteilt auf dem Umfang auf. Diese Nuten 19 sind in Bezug auf die Koppelabschnitte 13h diesen jeweils direkt gegenüber angeordnet. D.h., zwischen einer gedachten Mittellinie eines Koppelabschnitts 13h und einer gedachten Mittellinie der gegenüberliegenden Nut 19 liegt ein Winkel von 180°. Die Koppelabschnitte 13h sind mit regelmäßigen Winkelabständen angeordnet. In diesem Fall betragen die Winkel zwischen den gedachten Mittellinien zweier Koppelabschnitte 13h jeweils 120°, ebenso jeder Winkel zwischen den gedachten Mittellinien zweier Nuten 19.

Die folgende Beschreibung einer Nut 19 betrifft alle Nuten 19 der Antriebseinheit 13. Die Nut 19 weist einen Flächenabschnitt 19a auf, der seitlich durch Kontaktflächen 19b begrenzt ist. Eine Öffnung der Nut 19, d.h. eine Umfangsabschnittslänge, ist an der Außenseite der Antriebseinheit 13 größer als an der Innenseite. Mit anderen Worten, die Nut 19 verjüngt sich radial von außen nach innen. Außerdem besitzt der Flächenabschnitt 19a ein Gefälle, welches von außen nach innen in Fig. 5a abfällt. D.h., eine Tiefe der Nut 19 in axialer Richtung der Antriebseinheit 13 gemessen von der Bodenaußenseite 13e aus ist am Außendurchmesser geringer als am Innendurchmesser der inneren Öffnung des Bodens 13a.

Bei der Montage der Antriebseinheiten 13 mit dem Spannfederelement 18 auf der Nachstellspindel 6, 6' in die Traverse 7 stehen zunächst die Enden der Federkontaktabschnitte 18e mit den Flächenabschnitten 19b der Nuten 19 der Antriebseinheit 13 in Kontakt. Dies ist in der in Fig. 5 gezeigten Montagezwischenstellung deutlich zu erkennen. Der Ring 18a des Spannfederelementes 18 befindet sich noch in einem größeren Abstand zu der Bodenaußenseite 13e des Bodens 13a der Antriebseinheit 13. Bei weiterem Zusammenbau in die Aufnahme 7b der Traverse 7 kommt das Spannfederelement 18 in dem Zwischenraum 7c der Aufnahme 7b auf deren Boden zur Auflage und wird gegen den Boden 13a der Antriebseinheit 13 gedrückt. Dabei gleiten die Enden der Federkontaktabschnitte 18e auf den zur Spindelachse 5a, 5'a hin nach unten geneigten Flächenabschnitten 19a weiter nach innen. Aufgrund der oben beschriebenen Verjüngung der Flächenabschnitte 19a und seitlichen Kontaktflächen 19b und aufgrund des oben beschriebenen kleineren Winkels der Federkontaktabschnitte 18e zu Kontaktabschnitten 18b (kleiner als der Winkel der gedachten Mittellinien der Nuten 19 zu den gegenüberliegenden Koppelabschnitten 13h) werden die Federkontaktabschnitte 18e federnd zur Seite gebogen, wobei auch die Verbindungen 18c, 18d entsprechend federnd beansprucht werden. Hierdurch wird eine rotatorische Verspannung zwischen der Antriebseinheit 13 und der Nachstellspindel 6, 6' erreicht.

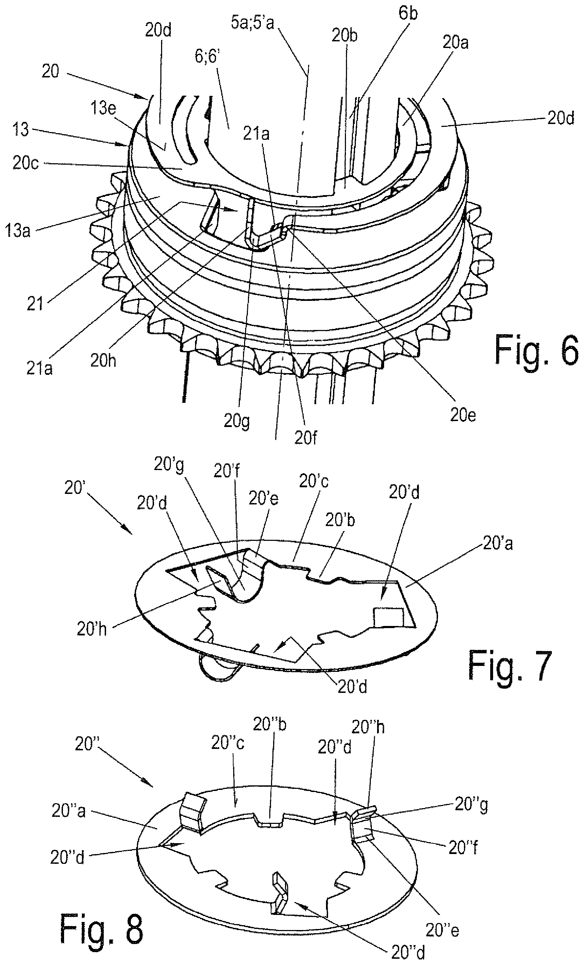

In Fig. 6 ist eine schematische Perspektivansicht eines dritten Ausführungsbeispiels der erfindungsgemäßen Antriebseinheit 13 dargestellt.

Das dritte Ausführungsbeispiel der Antriebseinheit 13 weist ein Spannfederelement 20 auf, welches ähnlich wie das Spannfederelement 14 des ersten Ausführungsbeispiels nach Fig. 3 aufgebaut ist.

Das Spannfederelement 20 ist z.B. aus einem flachen Federstahl als Stanz-/Biegeteil als eine Art ebene Spiralfeder hergestellt und umfasst einen Innenring 20a mit mindestens einem Kontaktabschnitt 20b, einen Spannabschnitt 20d und mindestens einen Federkontaktabschnitt 20f. Der Innenring 20a weist den mindestens einen Kontaktabschnitt 20b auf, der wie der Koppelabschnitt 13h der Antriebseinheit 13 zahnförmig ausgebildet ist und auch in gleicher Weise nach innen vom Innenring 20a hervorsteht. Der Spannabschnitt 20d ist mit einem Ende über eine Verbindung 20c an einer Stelle des Außenumfangs des Innenrings 20a mit diesem verbunden. Diese Stelle befindet sich auch hier dem Kontaktabschnitt 20b schräg gegenüberliegend. Der Spannabschnitt 20d ist in radialer Breite etwa doppelt so breit wie der Innenring 20a und umgibt den diesen in einem Abstand. Die Breite des Spannabschnitts 20d verjüngt sich jedoch nicht wie diejenige des Spannabschnitts 14a im ersten Ausführungsbeispiel, sondern bleibt im Wesentlichen konstant bis zu einem anderen Ende des Spannabschnitts 20d. Dieses andere Ende des Spannabschnitts 20d geht mit einem bogenförmigen Übergang 20e (mit einem Winkel von ca. 90°) nach unten zur Bodenaußenseite 13e der Antriebseinheit 13 in den Federkontaktabschnitt 20f über, der auch als Vorspannschräge bezeichnet wird. Diese Vorspannschräge verläuft als Federkontaktabschnitt 20f nach unten zur Bodenaußenseite 13e der Antriebseinheit 13 weiter in Richtung auf die Verbindung 20c zu und geht dann in einen Bogenabschnitt 20g über, dessen verlängerter Endabschnitt 20h nach oben, d.h. etwa rechtwinklig zur Ebene des Innenrings 20a und Spannabschnitts 20d, weist und darüber hervorsteht.

Die Federkontaktabschnitte 20f erstrecken sich jeweils nach unten in eine Ausnehmung 21 des Bodens 13a der Antriebseinheit 13 hinein und stehen jeweils mit ihrer Unterseite, d.h. mit der der Antriebseinheit 13 zugewandten Seite, mit einer seitlichen Kontaktfläche 21 a der Ausnehmung 21 der Antriebseinheit 13 in Kontakt.

Bei der Montage der Antriebseinheiten 13 mit dem Spannfederelement 20 auf der Nachstellspindel 6, 6' in die Traverse 7 steht jeweils eine Unterseite eines Federkontaktabschnitts 20f mit der zugehörigen seitlichen Kontaktfläche 21 a der Ausnehmung 21 der Antriebseinheit 13 in Kontakt. Dies ist in Fig. 6 in einer Montagezwischenstellung illustriert. Der Innenring 20a und der Spannabschnitt 20d des Spannfederelementes 20 befinden sich noch in einem größeren Abstand zu der Bodenaußenseite 13e des Bodens 13a der Antriebseinheit 13. Bei weiterem Zusammenbau in die Aufnahme 7b der Traverse 7 dienen die Federkontaktabschnitte 20f als Vorspannschräge bzw. "Aufziehrampe". Auf diese Weise wird beim Montieren der Antriebseinheit 13 mit dem am Boden 13a angeordneten Spannfederelement 20 in die Aufnahme 7b der Traverse 7 der axiale Verschiebungsweg zum Spannen des Spannfederelementes 20 genutzt, welches sich in dem Zwischenraum 7c befindet und bei Montage bei Aufliegen auf dem Boden der Aufnahme 7b von diesem gegen den Boden 13a der Antriebseinheit 13 gedrückt wird. Die Nachtstellspindel 6, 6' und die Antriebseinheit 13 sind dann durch das so vorgespannte Spannfederelement 20 automatisch rotatorisch gegeneinander vorgespannt.

Fig. 7-8 zeigen schematische Perspektivansichten von Varianten eines Spannfederelementes 20', 20".

Diese Varianten können anstelle des Spannfederelementes 20 des dritten Ausführungsbeispiels der Antriebseinheit 13 verwendet werden. Sie sind z.B. aus flachem Federstahl als Stanz-/Biegebauteil hergestellt.

Das Spannfederelement 20' nach Fig. 7 umfasst einen ringartigen Körper 20'a mit einer Öffnung in der Mitte für die Nachstellspindel 6, 6' und sich nach innen radial erstreckenden Kontaktabschnitten 20'b zur Zusammenwirkung mit den Nuten 6b der Nachstellspindel 6, 6'. Jeweils einem Kontaktabschnitt 20'b gegenüberliegend weist der Körper 20'a rechteckförmige Ausnehmungen 20'd, hier drei Ausnehmungen 20'd, auf. An einer schmalen Seitenkante dieser Ausnehmungen 20'd ist jeweils ein Federkontaktabschnitt 20'f als Vorspannschräge mittels eines Übergangs 20'e angebracht. Der Federkontaktabschnitt 20'f weist nach unten (im Zusammenbau mit der Antriebseinheit 13 auf deren Boden 13a zu in eine der Ausnehmungen 21 hinein) und ist an seinem freien Ende mit einem Bogenabschnitt 20'g ausgebildet. Das andere Ende des Bogenabschnitts 20'g weist als ein Endabschnitt 20'h schräg nach oben.

Der Federkontaktabschnitt 20'f hat die gleiche Funktion wie der Federkontaktabschnitt 20f des Spannfederelementes 20 nach Fig. 6 und ist dort beschrieben.

Der Übergang 20'e, Federkontaktabschnitt 20'f, Bogenabschnitt 20'g und Endabschnitt 20'h sind hier aus dem Material des Körpers 20'a der jeweiligen Ausnehmung 20'd durch Stanz-/Biegeumformung gebildet. Sie können natürlich auch als separate Funktionseinheit an dem Körper 20'a angebracht sein.

Das andere Spannfederelement 20" nach Fig. 8 ist ähnlich ausgebildet wie dasjenige nach Fig. 7. Es umfasst ebenfalls einen ringartigen Körper 20"a, sich nach innen radial erstreckende Kontaktabschnitte 20"b, und rechteckförmige Ausnehmungen 20"d, die jedoch kleiner als diejenigen des Spannfederelementes 20' nach Fig. 7 sind. Auch hier ist an einer schmalen Seitenkante der Ausnehmungen 20"d jeweils ein Federkontaktabschnitt 20"f als Vorspannschräge mittels eines Übergangs 20"e angebracht. Der Federkontaktabschnitt 20"f weist im Zusammenbau mit der Antriebseinheit 13 auf deren Boden 13a zu in eine der Ausnehmungen 21 hinein und ist an seinem freien Ende mit einem relativ kleinen Bogenabschnitt 20"g ausgebildet. Das andere Ende des Bogenabschnitts 20"g weist als ein kurzer Endabschnitt 20"h schräg nach unten (in Bezug auf die Antriebseinheit 13).

Auch diese Federkontaktabschnitte 20"f haben die gleiche Funktion wie für das Spannfederelement 18 beschrieben.

Auch der Übergang 20"e, Federkontaktabschnitt 20"f, Bogenabschnitt 20"g und Endabschnitt 20"h sind hier aus dem Material des Körpers 20"a der jeweiligen Ausnehmung 20"d durch Stanz-/Biegeumformung gebildet. Sie können natürlich auch als separate Funktionseinheit an dem Körper 20"a angebracht sein.

Diese Varianten können mittels der Ausgestaltung der Ausnehmungen 20'd und 20"d an unterschiedlich große Ausnehmungen 21 der Antriebseinheit 13 und unterschiedliche Kraftausführungen angepasst werden.

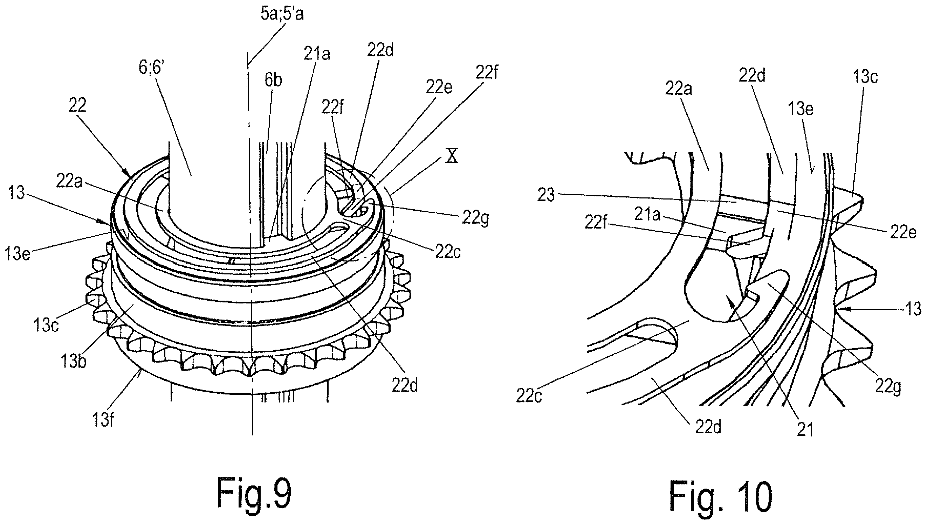

Schließlich zeigt Fig. 9 eine schematische Perspektivansicht eines vierten Ausführungsbeispiels der erfindungsgemäßen Antriebseinheit 13. In Fig. 10 ist eine vergrößerte Darstellung des Bereichs X der Fig. 9 gezeigt.

In dem vierten Ausführungsbeispiel der Antriebseinheit 13 wird die Ausführung der Antriebseinheit 13 des dritten Ausführungsbeispiels mit einer zusätzlichen Entrastungsschräge 23 verwendet, außerdem ist ein anderes Spannfederelement 22 vorgesehen, welches bis auf den Federkontaktabschnitt 22f und andere Abschnitte ähnlich wie das Spannfederelement 18 des dritten Ausführungsbeispiels nach Fig. 6 aufgebaut ist.

Die Entrastungsschräge 23 ist eine Art größere Fase im Übergang von der Fläche der Bodenaußenseite 13e des Antriebselementes 13 zu der jeweiligen seitlichen Kontaktfläche 21 a einer jeden Ausnehmung 21. Ihre Funktion wird unten noch erläutert.

Das Spannfederelement 22 ist z.B. aus einem flachen Federstahl als Stanz-/Biegeteil als eine Art ebene Spiralfeder hergestellt und umfasst einen Innenring 22a mit mindestens einem Kontaktabschnitt 22b, einen Spannabschnitt 22d und mindestens einen Federkontaktabschnitt 22f. Der Kontaktabschnitt 22b wie auch die Verbindung 22c sind in ihrer Form und Funktion bereits oben mehrfach beschrieben. Der Spannabschnitt 22d ist in radialer Breite etwa gleich derjenigen des Innenrings 22a und umgibt den diesen in einem Abstand. Die Breite des Spannabschnitts 22d verjüngt sich jedoch nicht wie diejenige des Spannabschnitts 14a im ersten Ausführungsbeispiel, sondern bleibt im Wesentlichen konstant bis zu einem anderen Ende des Spannabschnitts 22d. Dieses andere Ende des Spannabschnitts 22d geht mit einer bogenförmigen Verbindung 22e (mit einem Winkel von ca. 90°) nach unten zur Bodenaußenseite 13e der Antriebseinheit 13 in den Federkontaktabschnitt 22f über.

Dieser Federkontaktabschnitt 22f ist um ca. 90° nach unten zur Bodenaußenseite 13e der Antriebseinheit 13 gebogen und erstreckt sich in die Ausnehmung 21 der Antriebseinheit 13, wobei der Federkontaktabschnitt 22f schräg zur Spindelachse 5a, 5'a hin ausgebildet ist. Der Federkontaktabschnitt 22f erstreckt sich nach unten in die zugehörige Ausnehmung 21 des Bodens 13a der Antriebseinheit 13 hinein und steht mit seiner Unterseite, d.h. mit der der Antriebseinheit 13 zugewandten Seite, mit der zugehörigen seitlichen Kontaktfläche 21 a der Ausnehmung 21 der Antriebseinheit 13 in Kontakt.

Der Spannabschnitt 22d ist an seinem Ende, welches über die Verbindung 22c mit dem Innenring 22a verbunden ist, über die Verbindung 22c hinaus verlängert und mit einem Rasthaken 22g ausgebildet. Der Federkontaktabschnitt 22f wird bei einem Vorspannvorgang des Spannfederelementes 22 vor der Montage hinter den Rasthaken 22g eingehakt, wodurch das Spannfederelement 22 vorgespannt ist und zunächst auch vorgespannt bleibt.

Bei der Montage, wenn sowohl das Spannfederelement 22 als auch die Antriebseinheit 13 auf der Nachstellspindel 6, 6' aufgeschoben sind und die Antriebseinheit 13 in die Aufnahme 7b in die Traverse 7 eingeschoben wird, springt der vorgespannte und vom Rasthaken 22g gehaltene Federkontaktabschnitt 22f aufgrund seiner Schräge und der Entrastungsschräge 23 aus dem Rasthaken 22g. Dieser entrastete Zustand ist in Fig. 9 gezeigt, wobei Fig. 10 eine Vergrößerung dieses Bereichs darstellt. Dann sind die Nachtstellspindel 6, 6' und die Antriebseinheit 13 durch das so gespannte Spannfederelement 22 automatisch rotatorisch gegeneinander vorgespannt.

Die Erfindung ist nicht auf die oben beschriebenen Ausführungsbeispiele beschränkt. Die Erfindung ist im Rahmen der beigefügten Ansprüche modifizierbar.

Wie in Fig. 1 gezeigt, kann die Antriebseinheit 113 auch als Synchronrad in Zusammenwirkung mit der Synchroneinrichtung 12 und der Nachstellspindel 6, 6' an der Oberseite Verwendung finden.

So ist es z.B. denkbar, dass die Nachstelleinrichtung 10 mit einem elektrischen Antrieb versehen sein kann.

Es ist auch denkbar, dass die erfindungsgemäße Verschleißnachstellvorrichtung 24 zur Einstellung eines vorher festgelegten Lüftspiels ausgebildet sein, wobei unter dem Begriff "Einstellung" sowohl eine Lüftspielverkleinerung als auch eine Lüftspielvergrößerung zu verstehen ist. Das vorher festgelegte Lüftspiel ist durch die Geometrie der Scheibenbremse 1 bestimmt und weist ein so genanntes konstruktives Lüftspiel auf. Mit anderen Worten, die Verschleißnachstellvorrichtung 24 kann ein Lüftspiel verkleinern, wenn dieses in Bezug auf ein das vorher festgelegte Lüftspiel zu groß ist. Und sie kann ein Lüftspiel vergrößern, wenn dieses in Bezug auf das vorher festgelegte Lüftspiel zu klein ist.

Die Verzahnung 13c der Antriebseinheit 13 kann z.B. auch als Stirnradverzahnung ausgebildet sein, wenn die Synchroneinrichtung 12 anstelle einer Kette ein Zahnradgetriebe als Synchronmittel 12a aufweist.

Weiterhin ist es denkbar, dass die Veränderung der radialen Breite des Spannabschnitts 14a abhängig von dem Winkel α stufenweise oder in Kombination stufenweise und stufenlos ausgebildet ist.

Anstelle oder/und zusätzlich zu der radialen Breite 110 kann auch die axiale Dicke des Spannabschnitts 14a verändert sein.

### Bezugszeichenliste

- 1: Scheibenbremse
- 2: Bremsscheibe
- 2a: Bremsscheibendrehachse
- 3: Bremsbelag
- 3a: Bremsbelagträger
- 4: Bremssattel
- 5, 5': Spindeleinheit
- 5a, 5'a: Spindelachse
- 6, 6': Nachstellspindel
- 6a, 6'a: Druckstück
- 6b: Nut
- 7: Traverse
- 7a: Rückstellfeder
- 7b: Aufnahme
- 7c: Zwischenraum
- 8: Drehhebel
- 8a: Betätiger
- 9: Betätigungsantrieb
- 10: Nachstelleinrichtung
- 10a: Antriebselement
- 10b: Schaltgabel
- 11: Mitnehmer
- 12: Synchroneinrichtung
- 12a: Synchronmittel
- 13: Antriebseinheit
- 13a: Boden
- 13b: Wand
- 13c: Verzahnung
- 13d: Innenseite
- 13e: Bodenaußenseite
- 13f: Wandoberseite
- 13g: Koppelausnehmung
- 13h: Koppelabschnitt
- 13i: Nut
- 14: Spannfederelement
- 14a: Spannabschnitt
- 14b: Innenring
- 14c: Verbindung
- 14d: Kontaktabschnitt
- 14e: Federende
- 14f: Federkontaktabschnitt
- 15: Ausnehmung
- 15a: Kontaktfläche
- 16: Montagewerkzeug
- 16a: Körper
- 16b: Stirnseite
- 16c: Spannfinger
- 16d: Innenvorsprung
- 16e: Seitenfläche
- 17: Montagewerkzeug
- 17a: Körper
- 17b: Stirnseite
- 17c: Führungsnut
- 17d: Schräge
- 17e: Ende
- 18: Spannfederelement
- 18a: Ring
- 18b: Kontaktabschnitt
- 18c, 18d: Verbindung
- 18e: Federkontaktabschnitt
- 19: Nut
- 19a: Flächenabschnitt
- 19b: Kontaktfläche
- 20, 20', 20": Spannfederelement
- 20a: Innenring
- 20'a, 20"a: Körper
- 20b, 20'b, 20"b: Kontaktabschnitt
- 20c, 20'c, 20"c: Verbindungsabschnitt
- 20d: Spannabschnitt
- 20'd, 20"d: Ausnehmung
- 20e, 20'e, 20"e: Übergang
- 20f, 20'f, 20"f: Vorspannschräge
- 20g, 20'g, 20"g: Bogenabschnitt
- 20h, 20'h, 20"h: Federkontaktabschnitt
- 21: Ausnehmung
- 21a: Kontaktfläche
- 22: Spannfederelement
- 22a: Innenring
- 22b: Kontaktabschnitt
- 22c: Verbindung
- 22d: Spannabschnitt
- 22e: Verbindung
- 22f: Federkontaktabschnitt
- 22g: Rasthaken
- 23: Entrastungsschräge
- 24: Verschleißnachstellvorrichtung
- 100, 110: Radiale Breite
- 113: Antriebseinheit
- 140-144: Spannabschnittsbereich
- 140a: Maximum
- 145: Verbindung
- 146: Vorsprung
- α: Winkel

## Patentansprüche

1. Scheibenbremse (1), vorzugsweise druckluftbetätigt, insbesondere für ein Kraftfahrzeug, mit einer Zuspannvorrichtung, vorzugsweise mit einem Drehhebel (8), mindestens einer Spindeleinheit (5, 5') mit mindestens einer Nachstellspindel (6, 6'), und einer Verschleißnachstellvorrichtung (24) mit einer Nachstelleinrichtung (10), welche mit der Zuspannvorrichtung, vorzugsweise mit dem Drehhebel (8), über einen Antrieb (9) und mit der mindestens einen Nachstellspindel (6, 6') über eine Antriebseinheit (13, 113) gekoppelt ist, wobei die Antriebseinheit (13, 113) auf die Nachstellspindel (6, 6') aufgeschoben ist und über mindestens einen Koppelabschnitt (13h) mit der Nachstellspindel (6, 6') rotatorisch formschlüssig gekoppelt ist,
**dadurch gekennzeichnet,**
**dass** die Antriebseinheit (13, 113) mit der mindestens einen Nachstellspindel (6, 6') über mindestens ein Spannfederelement (14, 18, 20, 20', 20", 22) spielfrei rotatorisch formschlüssig gekoppelt ist.

2. Scheibenbremse (1) nach Anspruch 1, **dadurch gekennzeichnet, dass** das mindestens eine Spannfederelement (14, 18, 20, 20', 20", 22) die Antriebseinheit (13, 113) gegen die Nachstellspindel (6, 6') rotatorisch um eine Spindelachse (5a, 5'a) der Nachstellspindel (6, 6') verspannt.

3. Scheibenbremse (1) nach Anspruch 2, **dadurch gekennzeichnet, dass** das mindestens eine Spannfederelement (14, 18, 20, 20', 20", 22) mindestens einen Kontaktabschnitt (14d, 18b, 20b, 20'b, 20"b, 22b), welcher mit der Nachstellspindel (6, 6') rotatorisch formschlüssig gekoppelt ist, und mindestens einen Federkontaktabschnitt (14f, 18e, 20f, 20'f, 20"f, 22f), welcher mit mindestens einer Kontaktfläche (15a, 19b, 21 a) der Antriebseinheit (13, 113) in Kontakt steht, aufweist.

4. Scheibenbremse (1) nach Anspruch 3, **dadurch gekennzeichnet, dass** der mindestens eine Kontaktabschnitt (14d, 18b, 20b, 20'b, 20"b, 22b) mit einem Innenring (14b, 20a, 22a) bzw. Ring (18a) oder ringförmigen Körper (20'a, 20"a) fest verbunden ist.

5. Scheibenbremse (1) nach Anspruch 4, **dadurch gekennzeichnet, dass** das mindestens eine Spannfederelement (14, 20, 20', 20", 22) als eine Art ebene Spiralfeder ausgebildet ist, wobei der mindestens eine Federkontaktabschnitt (14f, 20f, 20'f, 20"f, 22f) mit dem mindestens einen Kontaktabschnitt (14d, 20b, 20'b, 20"b, 22b) über einen federnden Spannabschnitt (14a, 20d, 22) verbunden ist.

6. Scheibenbremse (1) nach Anspruch 5, **dadurch gekennzeichnet, dass** der federnde Spannabschnitt (14a) mit einem Ende an dem Innenring (14b) fest angebracht ist und den Innenring (14b) umlaufend in einem Winkel (α) kleiner 360°, beispielsweise etwa 330°, bis zu einem freien Federende (14e) des Spannabschnitts (14a), welches den mindestens einen Federkontaktabschnitt (14f) aufweist, umgibt.

7. Scheibenbremse (1) nach Anspruch 6, **dadurch gekennzeichnet, dass** der federnde Spannabschnitt (14a) abhängig von dem Winkel (α) unterschiedliche Querschnitte aufweist.

8. Scheibenbremse (1) nach Anspruch 7, **dadurch gekennzeichnet, dass** der federnde Spannabschnitt (14a) abhängig von dem Winkel (α) eine unterschiedliche radiale Breite (110) aufweist.

9. Scheibenbremse (1) nach einem der Ansprüche 6 bis 8, **dadurch gekennzeichnet, dass** an dem Federende (14e) ein rechteckförmiger Vorsprung (146) angeformt, welcher sich radial nach innen auf den Innenring (14b) zu erstreckt.

10. Scheibenbremse (1) nach Anspruch 5, **dadurch gekennzeichnet, dass** der mindestens eine Federkontaktabschnitt (20f, 20'f, 20"f) als Vorspannschräge zur Zusammenwirkung mit einer Kontaktfläche (15a, 19b, 21 a) der Antriebseinheit (13, 113) ausgebildet ist.

11. Scheibenbremse (1) nach Anspruch 5, **dadurch gekennzeichnet, dass** das mindestens eine Spannfederelement (22) einen Rasthaken (22g) aufweist, welcher mit dem mindestens einen Federkontaktabschnitt (22f) in einem vorgespannten Zustand des Spannfederelementes (22) vor einer Montage verrastet ist und im zusammengebauten Zustand mit der Antriebseinheit (13, 113) automatisch entrastet ist.

12. Scheibenbremse (1) nach Anspruch 4, **dadurch gekennzeichnet, dass** der mindestens eine Federkontaktabschnitt (18e) mit dem mindestens einen Kontaktabschnitt (18b) über eine federnde Verbindung (18c, 18d) verbunden ist.

13. Scheibenbremse (1) nach Anspruch 12, **dadurch gekennzeichnet, dass** der mindestens eine Federkontaktabschnitt (18e) mit einem Flächenabschnitt (19a) einer Nut (19) der Antriebseinheit (13, 113) und mit seitlichen Kontaktflächen (19b) der Nut (19), welche den Flächenabschnitt (19a) begrenzen, in Kontakt steht.

14. Scheibenbremse (1) nach Anspruch 13, **dadurch gekennzeichnet, dass** ein Winkel zwischen gedachten Mittellinien eines Kontaktabschnitts (18b) und eines Federkontaktabschnitt (18e) des Spannfederelementes (18) kleiner ist als ein Winkel zwischen gedachten Mittellinien eines Koppelabschnitts (13h) und einer Nut (19) der Antriebseinheit (13, 113).

15. Scheibenbremse (1) nach Anspruch 13 oder 14, **dadurch gekennzeichnet, dass** die Nut (19) der Antriebseinheit (13, 113) so ausgebildet ist, dass sie sich radial von der Außenseite der Antriebseinheit (13, 113) nach innen verjüngt.

16. Scheibenbremse (1) nach einem der Ansprüche 13 bis 15, **dadurch gekennzeichnet, dass** der Flächenabschnitt (19a) der Nut (19) ein Gefälle aufweist, welches radial von der Außenseite der Antriebseinheit (13, 113) nach innen abfällt.

17. Scheibenbremse (1) nach einem der vorhergehenden Ansprüche, weiterhin aufweisend zwei Spindeleinheiten (5, 5') mit jeweils einer Nachstellspindel (6, 6'), wobei die Nachstellspindeln (6, 6') in einer Traverse (7) in Gewinden eingesetzt sind, wobei die Verschleißnachstellvorrichtung (20) eine Nachstelleinrichtung (10), einen Mitnehmer (11) und eine Synchroneinrichtung (12) umfasst, wobei jeweils eine Antriebseinheit (13, 113) mit einer Nachstellspindel (6, 6') gekoppelt ist, **dadurch gekennzeichnet, dass** jede der Antriebseinheiten (13, 113) jeweils eine Verzahnung (13c) zur Zusammenwirkung mit der Synchroneinrichtung (12) aufweist.

18. Scheibenbremse (1) nach Anspruch 17, **dadurch gekennzeichnet, dass** die Synchroneinrichtung (12) auf der Traverse (7) angeordnet ist.

19. Scheibenbremse (1) nach Anspruch 18, **dadurch gekennzeichnet, dass** jede der Antriebseinheiten (13, 113) jeweils in einer Aufnahme (7b) der Traverse (7) angeordnet ist.

20. Scheibenbremse (1) nach Anspruch 19, **dadurch gekennzeichnet, dass** jede der Antriebseinheiten (13, 113) mindestens ein Spannfederelement (14, 18, 20, 20', 20", 22) aufweist, welches jeweils in einem Zwischenraum (7c) zweischen einem Boden (13a) der jeweiligen Antriebseinheit (13, 113) und einem Boden der zugehörigen Aufnahme (7b) angeordnet ist.

21. Scheibenbremse (1) nach einem der vorhergehenden Ansprüche, **dadurch gekennzeichnet, dass** die mindestens eine Nachstellspindel (6, 6') als Gewindestange ausgebildet ist.

22. Scheibenbremse (1) nach einem der vorhergehenden Ansprüche, **dadurch gekennzeichnet, dass** das mindestens eine Spannfederelement (14, 18, 20, 20', 20", 22) aus einem flachen Federstahl als Stanz-/Biegeteil hergestellt ist.

## Claims

1. Disc brake (1), preferably pneumatically actuated, in particular for a motor vehicle, comprising an application device, preferably with a rotary lever (8), at least one spindle unit (5, 5') having at least one adjusting spindle (6, 6'), and a wear adjustment device (24) with a readjustment unit (10) coupled to the application device, preferably to the rotary lever (8), via a drive (9) and to the at least one adjusting spindle (6, 6') via a drive unit (13, 113), wherein the drive unit (13, 113) is pushed onto the adjusting spindle (6, 6') and coupled to the adjusting spindle (6, 6') via at least one coupling section (13h) in a rotationally positive manner,
**characterised in that**
the drive unit (13, 113) is coupled to the at least one adjusting spindle (6, 6') via at least one tension spring element (14, 18, 20, 20', 20", 22) in a rotationally positive manner without play.

2. Disc brake (1) according to claim 1, **characterised in that** the at least one tension spring element (14, 18, 20, 20', 20", 22) clamps the drive unit (13, 113) against the adjusting spindle (6, 6') rotationally about a spindle axis (5a, 5'a) of the adjusting spindle (6, 6').

3. Disc brake (1) according to claim 2, **characterised in that** the at least one tension spring element (14, 18, 20, 20', 20", 22) comprises at least one contact section (14d, 18b, 20b, 20'b, 20"b, 22b) coupled to the adjusting spindle (6, 6') in a rotationally positive manner and at least one spring contact section (14f, 18e, 20f, 20'f, 20"f, 22f) in contact with at least one contact surface (15a, 19b, 21a) of the drive unit (13, 113).

4. Disc brake (1) according to claim 3, **characterised in that** the at least one contact section (14d, 18b, 20b, 20'b, 20"b, 22b) is permanently joined to an inner ring (14b, 20a, 22a) or a ring (18a) or an annular body (20'a, 20"a).

5. Disc brake (1) according to claim 4, **characterised in that** the at least one tension spring element (14, 20, 20', 20", 22) is designed as a kind of flat coil spring, the at least one spring contact section (14f, 20f, 20'f, 20"f, 22f) being joined to the at least one contact section (14d, 20b, 20'b, 20"b, 22b) via a resilient clamping section (14a, 20d, 22).

6. Disc brake (1) according to claim 5, **characterised in that** the resilient clamping section (14a) is securely mounted with one end on the inner ring (14b) and surrounds the inner ring (14b) continuously at an angle (α) smaller than 360°, for example approximately 330°, up to a free spring end (14e) of the clamping section (14a), which comprises the at least one spring contact section (14f).

7. Disc brake (1) according to claim 6, **characterised in that** the resilient clamping section (14a) has different cross-sections depending on the angle (α).

8. Disc brake (1) according to claim 7, **characterised in that** the resilient clamping section (14a) has a different radial width (110) depending on the angle (α).

9. Disc brake (1) according to any of claims 6 to 8, **characterised in that** a rectangular projection (146) extending radially inwards towards the inner ring (14b) is integrally formed at the spring end (14e).

10. Disc brake (1) according to claim 5, **characterised in that** the at least one spring contact section (20f, 20'f, 20"f) is designed as a preloading chamfer to act together with a contact surface (15a, 19b, 21a) of the drive unit (13, 113).

11. Disc brake (1) according to claim 5, **characterised in that** the at least one tension spring element (22) comprises a latching hook (22g), which is before assembly latched to the at least one spring contact section (22f) in a preloaded state of the tension spring element (22) and automatically unlatched in the assembled state with the drive unit (13, 113).

12. Disc brake (1) according to claim 4, **characterised in that** the at least one spring contact section (18e) is joined to the at least one contact section (18b) via a resilient connection (18c, 18d).

13. Disc brake (1) according to claim 12, **characterised in that** the at least one spring contact section (18e) is in contact with a surface section (19a) of a groove (19) of the drive unit (13, 113) and with lateral contact surfaces (19b) of the groove (19), which bound the surface section (19a).

14. Disc brake (1) according to claim 13, **characterised in that** an angle between imaginary central lines of a contact section (18b) and a spring contact section (18e) of the tension spring element (18) is smaller than an angle between imaginary central lines of a coupling section (13h) and a groove (19) of the drive unit (13, 113).

15. Disc brake (1) according to claim 13 or 14, **characterised in that** the groove (19) of the drive unit (13, 113) is designed such that it tapers radially inwards from the outside of the drive unit (13, 113).

16. Disc brake (1) according to any of claims 13 to 15, **characterised in that** the surface section (19a) of the groove (19) has a gradient which drops radially inwards from the outside of the drive unit (13, 113).

17. Disc brake (1) according to any of the preceding claims, further comprising two spindle units (5, 5') with an adjusting spindle (6, 6') each, wherein the adjusting spindles (6, 6') are installed in threads in a crossbar (7), wherein the wear adjustment device (24) comprises a readjustment unit (10), a driver (11) and a synchronising device (12), wherein one drive unit (13, 113) each is coupled to an adjusting spindle (6, 6'), **characterised in that** each of the drive units (13, 113) has a toothing (13c) for acting together with the synchronising device (12).

18. Disc brake (1) according to claim 17, **characterised in that** the synchronising device (12) is located on the crossbar (7).

19. Disc brake (1) according to claim 18, **characterised in that** each of the drive units (13, 113) is located in a receptacle (7b) of the crossbar (7).

20. Disc brake (1) according to claim 19, **characterised in that** each of the drive units (13, 113) is comprises at least one tension spring element (14, 18, 20, 20', 20", 22), each of which is located in a space (7c) between a base (13a) of the respective drive unit (13, 113) and a base of the associated receptacle (7b).

21. Disc brake (1) according to any of the preceding claims, **characterised in that** the at least one adjusting spindle (6, 6') is designed as a threaded rod.

22. Disc brake (1) according to any of the preceding claims, **characterised in that** the at least one tension spring element (14, 18, 20, 20', 20", 22) is produced as a stamped and bent part from flat spring steel.

## Revendications

1. Frein à disque (1), de préférence actionné par air comprimé, en particulier pour un véhicule utilitaire, comprenant un dispositif de serrage, de préférence comprenant un levier tournant (8), au moins une unité de broche (5, 5') munie d'au moins une broche de rattrapage (6, 6'), et un dispositif de rattrapage d'usure (24) pourvu d'un moyen de rattrapage (10), lequel est couplé au dispositif de serrage, de préférence au levier tournant (8), via un entraînement (9) et à l'au moins une broche de rattrapage (6, 6') via une unité d'entraînement (13, 113), sachant que l'unité d'entraînement (13, 113) est emmanchée sur la broche de rattrapage (6, 6') et est couplée par liaison à engagement positif en rotation à la broche de rattrapage (6, 6') via au moins une section de couplage (13h),
**caractérisé en ce que**
l'unité d'entraînement (13, 113) est couplée par liaison à engagement positif en rotation sans jeu à l'au moins une broche de rattrapage (6, 6') via au moins un élément de ressort de serrage (14, 18, 20, 20', 20", 22).

2. Frein à disque (1) selon la revendication 1, **caractérisé en ce que** l'au moins un élément de ressort de serrage (14, 18, 20, 20', 20", 22) serre l'unité d'entraînement (13, 113) contre la broche de rattrapage (6, 6') en rotation autour d'un axe de broche (5a, 5'a) de la broche de rattrapage (6, 6').

3. Frein à disque (1) selon la revendication 2, **caractérisé en ce que** l'au moins un élément de ressort de serrage (14, 18, 20, 20', 20", 22) présente au moins une section de contact (14d, 18b, 20b, 20'b, 20"b, 22b), laquelle est couplée par liaison à engagement positif en rotation à la broche de rattrapage (6, 6'), et au moins une section de contact de ressort (14f, 18e, 20f, 20'f, 20"f, 22f), laquelle est en contact avec au moins une surface de contact (15a, 19b, 21a) de l'unité d'entraînement (13, 113).

4. Frein à disque (1) selon la revendication 3, **caractérisé en ce que** l'au moins une section de contact (14d, 18b, 20b, 20'b, 20"b, 22b) est fermement reliée à une bague intérieure (14b, 20a, 22a) ou une bague (18a) ou un corps annulaire (20'a, 20"a).

5. Frein à disque (1) selon la revendication 4, **caractérisé en ce que** l'au moins un élément de ressort de serrage (14, 20, 20', 20", 22) est constitué comme sorte de ressort hélicoïdal plan, sachant que l'au moins une section de contact de ressort (14f, 20f, 20'f, 20"f, 22f) est reliée à l'au moins une section de contact (14d, 20b, 20'b, 20"b, 22b) via une section de serrage élastique (14a, 20d, 22).

6. Frein à disque (1) selon la revendication 5, **caractérisé en ce que** la section de serrage élastique (14a) est fermement montée par une extrémité sur la bague intérieure (14b) et entoure la bague intérieure (14b) de manière périphérique selon un angle (α) inférieur à 360°, par exemple d'environ 330°, jusqu'à une extrémité de ressort libre (14e) de la section de serrage (14a), laquelle présente l'au moins une section de contact à ressort (14f).

7. Frein à disque (1) selon la revendication 6, **caractérisé en ce que** la section de serrage élastique (14a) présente différentes coupes transversales en fonction de l'angle (α).

8. Frein à disque (1) selon la revendication 7, **caractérisé en ce que** la section de serrage élastique (14a) présente une largeur radiale (110) différente en fonction de l'angle (α).

9. Frein à disque (1) selon l'une des revendications 6 à 8, **caractérisé en ce qu'**une saillie (146) rectangulaire qui s'étend radialement vers l'intérieur en direction de la bague intérieure (14b) est façonnée au niveau de l'extrémité de ressort (14e).

10. Frein à disque (1) selon la revendication 5, **caractérisé en ce que** l'au moins une section de contact de ressort (20f, 20'f, 20"f) est constituée comme chanfrein de précontrainte pour interagir avec une surface de contact (15a, 19b, 21 a) de l'unité d'entraînement (13, 113).

11. Frein à disque (1) selon la revendication 5, **caractérisé en ce que** l'au moins un élément de ressort de serrage (22) présente un crochet d'encliquetage (22g), lequel est encliqueté avec l'au moins une section de contact de ressort (22f) dans un état précontraint de l'élément de ressort de serrage (22) avant un montage et se décliquette automatiquement à l'état assemblé avec l'unité d'entraînement (13, 113).

12. Frein à disque (1) selon la revendication 4, **caractérisé en ce que** l'au moins une section de contact de ressort (18e) est reliée à l'au moins une section de contact (18b) via une liaison élastique (18c, 18d).

13. Frein à disque (1) selon la revendication 12, **caractérisé en ce que** l'au moins une section de contact de ressort (18e) est en contact avec une section de surface (19a) d'une rainure (19) de l'unité d'entraînement (13, 113) et avec des surfaces de contact latérales (19b) de la rainure (19), lesquelles délimitent la section de surface (19a).

14. Frein à disque (1) selon la revendication 13, **caractérisé en ce qu'**un angle entre des lignes médianes imaginées d'une section de contact (18b) et d'une section de contact de ressort (18e) de l'élément de ressort de serrage (18) est plus petit qu'un angle entre des lignes médianes imaginées d'une section de couplage (13h) et d'une rainure (19) de l'unité d'entraînement (13, 113).

15. Frein à disque (1) selon la revendication 13 ou 14, **caractérisé en ce que** la rainure (19) de l'unité d'entraînement (13, 113) est constituée de manière à s'amincir radialement depuis la face extérieure de l'unité d'entraînement (13, 113) vers l'intérieur.

16. Frein à disque (1) selon l'une des revendications 13 à 15, **caractérisé en ce que** la section de surface (19a) de la rainure (19) présente une pente qui descend radialement depuis la face extérieure de l'unité d'entraînement (13, 113) vers l'intérieur.

17. Frein à disque (1) selon l'une des revendications précédentes, présentant en outre deux unités de broche (5, 5') munies respectivement d'une broche de rattrapage (6, 6'), sachant que les broches de rattrapage (6, 6') sont insérées dans une traverse (7) dans des filetages, sachant que le dispositif de rattrapage d'usure (20) comprend un moyen de rattrapage (10), un entraîneur (11) et un moyen de synchronisation (12), sachant que respectivement une unité d'entraînement (13, 113) est couplée à une broche de rattrapage (6, 6'), **caractérisé en ce que** chacune des unités d'entraînement (13, 113) présente respectivement une denture (13c) pour interagir avec le moyen de synchronisation (12).

18. Frein à disque (1) selon la revendication 17, **caractérisé en ce que** le moyen de synchronisation (12) est disposé sur la traverse (7).

19. Frein à disque (1) selon la revendication 18, **caractérisé en ce que** chacune des unités d'entraînement (13, 113) est disposée respectivement dans un logement (7b) de la traverse (7).

20. Frein à disque (1) selon la revendication 19, **caractérisé en ce que** chacune des unités d'entraînement (13, 113) présente au moins un élément de ressort de serrage (14, 18, 20, 20', 20", 22), lequel est disposé respectivement dans un espace intermédiaire (7c) entre un fond (13a) de l'unité d'entraînement (13, 113) respective et un fond du logement (7b) associé.

21. Frein à disque (1) selon l'une des revendications précédentes, **caractérisé en ce que** l'au moins une broche de rattrapage (6, 6') est constituée comme tige filetée.

22. Frein à disque (1) selon l'une des revendications précédentes, **caractérisé en ce que** l'au moins un élément de ressort de serrage (14, 18, 20, 20', 20", 22) est fabriqué comme pièce emboutie/pliée à partir d'un acier à ressort plat.
